# EUROPEAN PATENT APPLICATION

(11) **EP 4 636 288 A1**
(43) Date of publication of application: **22.10.2025**
(21) Application number: 24170860.1
(22) Date of filing: 17.04.2024
(51) Int. Cl.: F16K 11/14, F16K 31/06, F03C 1/053, F04B 1/053, F04B 7/00

(54) **COMBINED VALVE ASSEMBLY**

(71) Applicant: Danfoss Scotland Limited, Edinburgh EH3 9DQ (GB)
(72) Inventor: EILERS, Jens, Edinburgh, EH3 9DQ (GB); SZOLLOSI, Akos, Edinburgh, EH3 9DQ (GB)
(74) Representative: Hindles Limited

(57) **Abstract**

According to an aspect of the invention, there is provided a combined valve assembly (100) having a first valve (102) with a first armature (104) movable between a first position and a second position, and a second valve (106) with a second armature (108) movable between a first position and a second position, the valve assembly comprising a coil (110) at least partially surrounded by a valve assembly body (103), wherein, when the coil (110) has a current passing therethrough, the coil is arranged to (110) generate: first flux loops (160) established in: a first region (112) of the combined valve assembly (100), wherein, of the first and second armatures (104, 108), the first region (112) comprises only the first armature (104), and a second region (114) of the combined valve assembly (100) and wherein the first region (112) comprises a first ferromagnetic region of the valve assembly body (103), wherein the second region (114) comprises a second ferromagnetic region of the valve assembly body (103), the second ferromagnetic region different to the first ferromagnetic region; and second flux loops (170) established in: the first region (112) of the combined valve assembly (100), and a third region (116) of the combined valve assembly (100), the third region separate from the second region and comprising the second armature (108), wherein the first flux loops (160) are established in, of the second region and the third region, only the second region, and wherein the second flux loops (170) are established in, of the second region and the third region, only the third region (116), and wherein, the valve assembly is configured such that: at a first time, when the first armature (104) is in the first position and the second armature (108) is in the first position, the flux established in the second region (114) is greater than the flux established in the third region (116), and at a second time, subsequent to the first time and when the first armature (104) has moved from the first position into the second position, the second region (114) is magnetically saturated to thereby cause the flux in the third region (116) to increase, relative to the first time, by more than any increase, relative to the first time, of the flux in the second region (114) at the second time.

## Description

### Field of the invention

The present invention relates to a combined valve assembly, a method of operating the combined valve assembly, a hydraulic fluid machine, and a controller of a combined valve assembly.

### Background to the invention

It is known to provide valve assemblies having a single coil controlling two valves. Typically, in existing technologies, a magnetic circuit is formed in the valve assembly. This requires a number of non-magnetic components, to direct the magnetic flux to promote a magnetic force to be generated appropriately to actuate the valves. Typically, the non-magnetic materials used for these components are weaker and/or more expensive compared to the materials used in the rest of the valve assembly.

It is in this context that the present inventions have been devised.

### Summary of the invention

In accordance with an aspect of the present invention, there is provided a combined valve assembly. The combined valve assembly comprises a first valve with a first armature) movable between a first position and a second position. The combined valve assembly comprises a second valve with a second armature movable between a first position and a second position. The valve assembly comprises a coil. The coil is at least partially surrounded by a valve assembly body. When the coil has a current passing therethrough, the coil is arranged to generate first flux loops. The first flux loops are established in a first region and in a second region of the combined valve assembly. Of the first and second armatures, the first region comprises only the first armature. The first and second regions comprise respective first and second ferromagnetic regions of the valve assembly body. The second ferromagnetic region is different to the first ferromagnetic region. When the coil has a current passing therethrough, the coil is arranged to generate second flux loops. The second flux loops are established in the first and third regions of the combined valve assembly. The third region is separate from the second region. The third region comprises the second armature. Of the second region and the third region, the first flux loops are established in only the second region. Of the second region and the third region, the second flux loops are established in only the third region. The valve assembly is configured such that, at a first time, when the first armature is in the first position and the second armature is in the first position, the flux established in the second region is greater than the flux established in the third region. The valve assembly is configured such that, at a second time, subsequent to the first time and when the first armature has moved from the first position into the second position, the second region is magnetically saturated to thereby cause the flux in the third region to increase, relative to the first time, by more than any increase, relative to the first time, of the flux in the second region at the second time.

Advantageously, as the first and second flux loops are established at least partly in different regions of the combined valve assembly, when the flux in the second region is such that the second region is saturated, the flux through the third region increases. This allows for actuation of both the first and second valves without requiring a separate coil for each valve, or requiring a region of non-magnetic material surrounding the second armature and within the valve assembly body. This is particularly advantageous because, by including a region of non-magnetic material surrounding the second armature and within the valve assembly body, this reduces the magnetic force generated on the first armature and additionally reduces the overall strength of the valves, leading to less reliable operation.

In addition, the combined valve assembly according to the present invention has fewer components (lower `part count') than existing combined valve assemblies that require a region of non-magnetic material surrounding the second armature and within the valve assembly body, which reduces both manufacturing complexity and costs. The combined valve assembly according to the present invention also experiences less fatigue and improved durability for steady-state pumping/motoring and output pressure cycling compared to existing combined valve assemblies. Moreover, the combined valve assembly according to the present invention has a greater amplitude back-EMF signal compared to that of existing combined valve assemblies. A greater amplitude back-EMF signal makes it easier to monitor for a state change of the valve.

Typically, the combined valve assembly comprises a plurality of valves which are each controlled via movement of a respective armature coupled to the valve. The combined valve assembly typically integrates both valves into one singular assembly. Typically, in the combined valve assembly, actuation of the first and second valves is coupled to one another in that actuation of the first valve causes sequential actuation of the second valve (e.g. after a set period of time).

The combined valve assembly may be part of a hydraulic apparatus. The hydraulic apparatus may comprise at least one working chamber in fluid communication with a first manifold and a second manifold (e.g. a high-pressure manifold and a low-pressure manifold). Fluid (e.g. a hydraulic liquid, such as oil) flows, during motoring, to the low-pressure manifold from the at least one working chamber during an exhaust stroke, and to the at least one working chamber from the high-pressure manifold during an intake stroke.

A low-pressure valve is arranged to control fluid communication between the low-pressure manifold and the at least one working chamber. A high-pressure valve is arranged to control fluid communication between the high-pressure manifold and the at least one working chamber. The first valve may be the low-pressure valve, and the second valve may be the high-pressure valve.

The first and second valves may be electromagnetic valves. The first and second valves may be electronically actuated valves. Thus, excitation of an electromagnet may be caused by passing a current through the coil (e.g. by directly or indirectly causing current to flow through the coil). The current may be caused to pass through the coil in response to a valve control signal. The excitation of the electromagnet causes a magnetic field to be generated. The armatures are typically ferrous armatures, or at least comprise a portion formed from a material which is urged to move when a magnetic field is applied thereto.

The first and second valves may each comprise a sealing member which is moveable to allow or restrict fluid communication between the working chamber and manifold connected to the respective valve. The sealing member may be moveable in accordance with movement of the respective armature between the first and second positions. Typically, one of the movable components of the solenoid (e.g. the armature) is coupled to the sealing member.

Typically, one of the movable components of the solenoid (e.g. the armature) is mechanically connected to the sealing member. The first armature may be mechanically connected to a first sealing member. The second armature may be mechanically connected to a second sealing member. The first valve may comprise a first connecting member (e.g. a rod). The first armature may be mechanically connected to the first sealing member by the first connecting member. The second valve may comprise a second connecting member (e.g. a rod). The second armature may be mechanically connected to the second sealing member by the second connecting member. The armature and sealing member may be the same part (machined as a single piece).

The first position of the first armature may correspond to a closed (or open) position of the first valve. The second position of the first armature may correspond to an open (or closed) position of the first valve. The first position of the second armature may correspond to a closed (or open) position of the second valve. The second position of the second armature may correspond to an open (or closed) position of the second valve.

It may be that, in an axial direction of the coil, the second armature is between the first armature and the sealing members of the first and second valves.

The first armature may be at least partially surrounded by the coil when the first armature is in the first and second positions. At least a portion of the second armature may be partially surrounded by the coil when the second armature is in the second position.

Typically, the valve assembly body and the coil are arranged such that part of the valve assembly body is located within the magnetic field generated when current is applied to the coil. Typically, the valve assembly body may be a housing of the valve assembly. Typically, the valve assembly body is formed of one or more regions of material in having a permeability of at least around two orders of magnitude of a vacuum. The valve assembly body may at least partially surround the first armature. The valve assembly body may at least partially surround the second armature.

It may be that the current applied to the coil is configured to be varied. It may be that the current applied to the coil is configured to be varied depending on the position of the second armature. It may be that the current applied to the coil is configured to be varied from a first magnitude to a second magnitude. When the current applied to the coil has the first magnitude, the second armature may be in the first position. When the current applied to the coil has the second magnitude, the second armature may be in the second position.

As is known to one in the art, the magnetic field defined around the coil establishes a number of continuous and concentrically arranged (though not perfectly circular) lines of magnetic flux around the coil.

The Figures provide two-dimensional representations of flux paths, which one skilled in the art can readily imagine projected in three-dimensions. The first flux loop may be established in first and second regions to the exclusion of the third region. The second flux loop may be established in first and third regions to the exclusion of the third region.

The first, second and third regions may each comprise at least a portion of one or more components of the combined valve assembly. The first, second and third regions may each comprise an airgap. Flux in the first flux loops may extend between the first and second regions. Flux in the first flux loops may extend across one or more airgaps.

Flux in the second flux loops may extend between the first and third regions. Flux in the second flux loops may extend across one or more airgaps.

The first and second regions may abut. The first flux loop may extend between the first region and the second region without passing through any further region. The first and third regions may abut. The second flux loop may extend between the first and third regions without passing through any further region. It may be that the length of the second flux loop is greater than the length of the first flux loop.

The first and second flux loops will vary in their precise physical locations in the first, second and third regions, depending on armature position, energisation, magnetic remnants, magnetic strength, and other factors as understood by one skilled in the art.

The first region is typically common to both the first and second flux loops. That is, both the first and second flux loops include flux established in the first region. It may be that the first flux loops include flux established in a different portion of the first region to the portion of the first region in which flux is established from the second flux loops.

The second and third regions are typically mutually exclusive. That is, flux in the first and second flux loops is established either in the second region or in the third region. The flux in the second and third regions may be magnetically parallel. Magnetically parallel flux path portions are formed when flux diverges creating two branches of flux paths that rejoin in a different location. The magnetically parallel flux path portions (branches) are established in the second and third regions which are different physical regions in the combined valve assembly. The flux in the first region may diverge (e.g. split) into the second and third regions, and it is these second and third regions carrying diverged flux, that help to define the respective first and second flux loops. The flux in the second and third regions may merge into the first region, in the sense that the first and second loops remain distinct around the loop, but vary around the loop between being directly adjacent (merged) and being separated (diverged).

Typically, when flux is established in a component of the combined valve assembly (e.g. the armatures, or the valve assembly body), the respective first, second or third region may be defined at least partially within that component. It may be that the component of the combined valve assembly in which flux of the first or second flux loops is established, comprises an air gap. It may be that the air gap is enclosed by the valve assembly body.

It may be that the first flux loops are established in the first armature (e.g. the first region) but are not established in nor passes through the second armature (e.g. the second region). It may be that the first flux loops are established in the valve assembly body. That is, the first flux loops may be established in both the valve assembly body and the first armature. It may be that the first region comprises at least a portion of the first armature.

It may be that the second flux loops are established in the second armature (e.g. the third region) but are not established in nor passes through the second region. The second region comprises a portion of the valve assembly body, to the exclusion of the first and second armatures..

It may be that the third region does not comprise the first armature. The third region may comprise both the valve assembly body and the second armature.

Typically, the first time may be a time at which the first armature is in the first position and the second armature is in the first position. Typically, at the first time, a first current (having the first magnitude) is applied to the coil. The first current may generate a first magnetic field having a first magnetic field strength.

It may be that, at the first time, the flux established in the second region is 50% greater than the flux established in the third region. It may be that, at the first time, the flux established in the second region is 100% greater than the flux established in the third region. It may be that, at the first time, the flux established in the second region is such as at least 3 times, for example at least 5 times, such as at least 7 times greater than the flux established in the third region. It may be that, at the first time, the flux established in the second region is such as less than 1000 times, for example less than 100 times greater than the flux established in the third region.

It may be that a percentage of total flux in the second region is at least 50%, such at least 60%, for example at least 70%, such as at least 80%, for example at least 90% of the total flux in the first region, at the first time.

It may be that, of the first flux loops and the second flux loops, at the first time, the majority (e.g. at least 50%) of the flux in the first region is from the first flux loops.

Typically, the second time may be a time at which the first armature is in the second position and the second armature is in the first position. The second time is after the first time. The second time may be a time before the second armature has moved into the second position. Typically, at the second time, the first current may still be applied to the coil. That is, the magnitude of the current applied to the coil may stay the same between the first time and the second time.

It may be that the first armature is configured to move into the second position from the first position when the force generated by the flux exceeds the forces acting on the first armature to hold the first armature in the first position. It may be that the forces acting on the first armature to hold the first armature in the first position comprise at least one of: hydraulic and spring forces.

Typically, the second region is a ferromagnetic region saturable during operation. In other words, the second region achieves a maximum flux density state which may also be described as a saturated state. The magnetic saturation of the second region achieves a maximum flux density within that region in the saturated state.

When a region of material becomes saturated, the magnetic flux density of that region substantially levels off (e.g. plateaus). This means that, even as the strength of the magnetic field, H, increases beyond a magnetic field strength corresponding to that of a saturation point (i.e. the point at which the second region is in the saturated state), the magnetic flux density of that region does not increase at a significant rate. The saturation point depends on a number of parameters, including the material through which the flux is established and the cross-sectional area of the material in the plane perpendicular to the direction of flux through that material.

At magnetic field strengths greater than the magnetic field strength corresponding to the saturation point of the second region, the density of flux of the second flux loops (and hence the amount of flux in the third region) increases because the second region, through which the first flux loops are established, is saturated.

As a result, at the second time, the increase in flux in the third region (either in absolute or percentage terms) is greater than the increase in flux in the second region at the second time because the second region is magnetically saturated (or just 'saturated'). In other words, the increase in flux of the second flux loops (either in absolute or percentage terms) is greater than the increase in flux of the first flux loops because the second region is magnetically saturated (or just 'saturated').

The increase in flux in the second region at the second time may be (e.g. substantially) zero. The increase in flux in the second region at the second time may be at most 50% of, such as at most 40% of, for example at most 25% of, such as at most 15% of, for example at most 10% of, such as at most 5% of, for example at most 1% of the increase in flux in the third region at the second time.

At the first time, it may be that the flux in the second region is less than the flux corresponding to the saturation point of the second region.

When the first armature moves from the first position to the second position, all other things (e.g. including driving current through the coil) being relatively unchanged, the flux in the first region may increase. Therefore, the flux in the first region is greater at the second time than the first time. The flux in the first region increases when the first armature moves from the first position to the second position because of a corresponding reduction in the magnetic reluctance of the first region.

It may be that the flux in the second region is greater at the second time than the flux in the second region at the first time.

Advantageously, the second region becomes saturated during the passage of time from the first time to the second time, as the flux generated by the coil (and thus the flux density) is greater at the second time compared to the first time.

It may be that at least one of: the current through the coil, the reluctance of the second region, the cross-sectional area of the second region, and the material selection of said region is configured such that said region becomes saturated at the first time.

It may be that there is more flux in the third region at the second time than at the first time.

It may be that the flux in the first region crosses between the valve assembly body and the first armature. It may be that the valve assembly is configured such that, at the first time, a first force is generated by the flux in the first region to actuate the first valve by causing the first armature to move into the second position.

The first armature moves relative to the valve assembly body along an axis parallel to the coil axis. An air gap at the innermost axial face of the first armature will vary in axial distance from a minimum to a maximum with axial motion of the first armature. The first region may include a flux overlap region and comprises multiple components (e.g. parts of the first armature, parts of the valve assembly body, parts of non-magnetic components of the combined valve assembly) that may be located in/around the variable sized airgap. That first region encompasses both the flux overlap region that does not include an airgap which opens and closes with the relative axial armature motion, and the overlap region that includes an airgap which increases and decreases (in size) directly with the relative axial armature motion. Flux passes across both of these overlap regions, but the most significant axial force changes arise in the overlap region that experiences the airgap increasing and decreasing with the relative axial motion of the first armature. We shall call this most significant overlap region the 'axial force generating' part of the first region, although all parts of the first region may be responsible for generating an axial force on the first armature.

Advantageously, the first force generated by the flux in the first region is sufficient to exert a force on the first armature to move the first armature into the second position, to thereby actuate the first valve.

Typically, the first region comprises the first armature and the valve assembly body. At the first time, the first region may have the greatest magnetic reluctance of any region in which the first flux loops are established.

The first region may comprise an air gap between the valve assembly body and the first armature. The first region may comprise an overlap region between the first armature and a magnetically conductive portion of the valve assembly body and is generally a region having a reluctance which decreases as the first armature is moved axially to the actuated position.

The first force may overcome the forces acting on the first armature which hold the first armature in the first position (e.g. the hydraulic and spring forces discussed above).

The first armature is positioned in the magnetic field that is selectively generated by the coil. The first force may act in the direction towards the centre of the coil in the axial direction. Typically, the first armature is positioned within the magnetic field such that the first force acts to pull the first armature downwards.

It may be that movement of the first armature into the second position thereby causes the magnetic reluctance of the first region to decrease, and the flux in the second region to increase.

Advantageously, the actuation of the first valve into the second position causes the reluctance of the first region to decrease. When the magnetic reluctance of the first region decreases, the flux in the first flux loops increases. Consequently, this causes the flux in the second region also to increase, which therefore causes saturation of the second region.

The magnetic reluctance of the first region varies depending on the position of the first armature. The first region may have a first magnetic reluctance at the first time and a second magnetic reluctance at the second time. In one embodiment, the first magnetic reluctance may be greater than the second magnetic reluctance, and thus the flux established in the first region at the first time is less than the flux established in the first region at the second time.

Advantageously, and as already mentioned the flux in the first region increases with a decrease in the axial distance between the first armature and the valve assembly body. During this decrease of axial distance, the flux in the second region increases eventually to the flux level corresponding to the saturation point, to thereby cause an urging force to move the second armature to actuate the second valve.

It may be that the axial distance when the first armature is in the second position is equal to zero. It may be that the first armature and the valve assembly body are in contact with one another in the second position. It may be that a surface of the first armature and a surface of the valve assembly body are in contact with one another. It may be that the axial distance is a distance in a direction perpendicular to a surface of the first armature.

It may be that an overlap area, in the first region, between the valve assembly body and the first armature is greater when the first armature is in the second position than when the first armature is in the first position.

Advantageously, the overlap area (which can be viewed as a two-dimensional area on a three dimensional surface) between the valve assembly body and the first armature, which changes depending on the position of the first armature, provides the functionality that the flux in the first region increases as the overlap area increases. As a result, the flux in the second region increases to the flux corresponding to the saturation point, to thereby cause movement of the second armature to actuate the second valve.

It may be that the overlap area when discussed in a two-dimensional sense is a shared area between a projection of a surface of the valve assembly body and a projection of a surface of the first armature. That is, it may be that the overlap area is a shared area between a projection of a surface of the valve assembly body and a projection of a surface of the first armature, when projected perpendicularly to the direction of motion of the armature. Typically, the projections are of the surfaces of the valve assembly body and the first armature that are closest to one another.

When the first armature is in the first position, the axial distance and/or the overlap area may be such that the magnetic reluctance of the first region is less than the magnetic reluctance of the first region when the first armature is in the second position.

Advantageously, when the axial distance is reduced and/or the overlap area is increased, the ability to transfer flux between the valve assembly body and the first armature is greater when the first armature is in the second position.

It may be that, at the first time, the second region is unsaturated and at the second time, the second region is saturated.

It may be that, at the first time, the second region is saturated and at the second time, the flux in the third region will have a higher increase compared to a configuration where the second region is not saturated at the first time. The higher flux in the third region corresponds to a higher force exerted on the second armature. This configuration may be achieved at the same coil power by reducing the cross-sectional area of the second region, thus reducing the level of flux at which the second region reaches saturation. However, such a configuration results in a lower magnetic force exerted on the first armature. Therefore, the cross-sectional area of the second region is a parameter which the skilled person who designs the magnetics may adjust to shift the balance between the force generated on the first and second armatures.

Advantageously, the second region is saturable so that the flux of the first region, which is above that of the flux corresponding to the flux of the saturation point of the second region, becomes flux in the third region (i.e. a second flux loop). The increase in flux in the third region causes a force to be exerted on the second armature to move the second armature to thereby cause actuation of the second valve.

At the first time, the flux in the second region may be less than the flux corresponding to the saturation point of the second region. At the second time, the flux in the second region may be equal to the flux corresponding to the saturation point of the second region.

Typically, the second region of the valve assembly body is formed of a material with a relatively high magnetic permeability.

It may be that the second region has the largest flux density of any region in which the first flux loops are established.

Advantageously, since the flux density of the second region is the greatest flux density of all regions in which the first flux loops are established, the saturation point of the second region is achieved before saturation of any other region in which the first flux loops are established. As a result, the second flux loops (e.g. established in the third region) experience an increase in flux at the second time. This causes subsequent actuation of the second valve by exertion of a sufficiently high force on the second armature to cause the second armature to move from the first position to the second position.

It may be that, at the second time, the second region has the largest flux density of any region in which the first flux loops are established. It may be that the second region has the lowest saturation point (i.e. is most readily saturated) of any region in which the first flux loops are established. It may be that, at the second time, the second region has the lowest saturation point of any region in which the first flux loops are established.

It may be that, when the first armature is in the second position, the cross-sectional area of the second region is less than the cross-sectional area of the other portions of the valve assembly body, said areas perpendicular to the direction of the flux respectively in the region and body.

Considering the first flux loop, the flux in that loop has the highest density in the second region, when the first armature is in the second position. This is because the second region has the smallest cross-sectional area of any region or area outside of a region in which the first flux loop is established, when the first armature is in the second position. The increased flux density in the second region is still below the saturation point of the second region, which density of flux in the second region therefore causes the flux in the third region to increase. Thus, the second armature is attracted to move from the first position to the second position.

It may be that the third region comprises a portion of the valve assembly body and the flux in the third region crosses between the valve assembly body and the second armature. It may be that the valve assembly is configured such that, at the second time, a second force is generated to actuate the second valve by causing the second armature to move to the second position. It may be that the valve assembly is configured such that, at the second time, a second force is generated to maintain the second valve in the second position. It may be that the valve assembly is configured such that, at the second time, a second force is generated to both actuate the second valve by causing the second armature to move to the second position and maintain the second valve in the second position.

Advantageously, the flux from the second flux loops that is established in the third region is magnetically parallel to the flux from the first flux loops that is established in the second region, and therefore the third region experiences an increase in flux when the first armature moves into the second position. The increase in flux in the third region causes the second force to be exerted on the second armature to actuate the second valve.

Typically, the flux in the third region crosses between the valve assembly body and the second armature in the third region. Typically, the flux in the third region is established in the second armature and the valve assembly body. It may be that the third region comprises an air gap. At the second time, the third region may have the greatest magnetic reluctance of any region in which the second flux loops are established.

The second force (which may arise from the energised solenoid coil, and/or from spring forces and/or from hydraulic flow forces), may overcome the forces acting on the second armature to hold the second armature in the first position (e.g. the hydraulic and spring forces) and cause movement of the second armature. The second force may overcome the forces acting on the second armature to move the second armature back to the first position (e.g. the hydraulic and spring forces) and prevent movement of the second armature. The second force may act in the direction towards the centre of the coil in the axial direction. Typically, the second armature is positioned and configured such that the second force acts to pull the second armature upwards (i.e. towards the coil), whether by magnetic force during energisation of the coil, or by spring force during a de-energised coil period.

It may be the third region defines an axial distance between the second armature and the valve assembly body when the second armature is in the first position. The second armature may contact the valve assembly body when the second armature is in the second position.

It may be that an (e.g. perpendicular) axial distance, if any, in the third region, between the valve assembly body and the second armature is less when the second armature is in the second position than when the second armature is in the first position.

It may be that an overlap area, in the third region, between the valve assembly body and the second armature is greater when the second armature is in the second position than when the second armature is in the first position.

It may be that when the second armature is in the first position, the third region comprises an air gap. It may be that the valve assembly is configured such that, when the second armature moves from the first position to the second position, the air gap is closed by movement of the second armature.

Advantageously, the air gap provides space for the second armature to move to open the second valve and is also magnetically resistant so this can be used in combination with chosen geometric properties of the combined valve assembly to control when the second valve will open subsequent to the first valve closing.

It may be that the combined valve assembly is configured such that actuation of the first armature causes an increase of flux in the third region, which thereby causes actuation of the second armature.

It may be that the combined valve assembly is configured such that actuation of the first valve causes an increase of flux in the third region, which thereby causes actuation of the second valve.

Advantageously, actuation of the first and second valves is coupled in the sense that actuation of the first valve triggers actuation of the second valve. The combined valve assembly is automated in the sense that sequential actuation of both valves may be implemented using a single input control signal providing current to the coil.

The actuation of the second valve is caused by the increase in the flux ('increased flux') through the third region. The flux in the third region increases when the first armature moves from the first position to the second position as the flux in the first region increases. When the first armature is in the second position, the flux in the first region is greater than the corresponding flux at the saturation point of the second region. Therefore, some of the increased flux from the first region, at the second time and when the first armature is in the second position, is established in the third region (e.g. to form the second flux loops).

It may be that, after the second armature has moved from the first position to the second position, the magnitude of the current passing through the coil is reduced. It may be that the current applied to the coil when the second armature is in the second position has the second magnitude. It may be that the current having the second magnitude is a latching current. It may be that the second magnitude of current is sufficient to hold the second armature in the second position. It may be that the second magnitude of current produces sufficient force to resist any hydraulic and/or spring forces acting to cause the second armature to move away from the second position.

Typically, the second magnitude (e.g. the latching current) is less than the first magnitude and is able to keep the second armature in the second positions because the movement of the second armature from the first position into the second position reduces the magnetic reluctance of the third region.

Advantageously, the reduced current to hold the second armature in the second position means that the overall power consumption of the combined valve assembly is reduced.

It may be that the combined valve assembly is configured such that actuation of the first valve causes the second valve to be actuated into the second position by the fluid forces. It may be that the second valve is maintained in the second position by magnetic forces which arise from the flux in the third region. It may be that the magnetic forces act between the valve assembly body and the second armature.

Advantageously, the magnetic forces arising from the flux passing via the third region can hold the second armature in the second position.

It may be that the fluid flow forces are caused by flow of hydraulic fluid caused by movement of a piston.

In accordance with an aspect of the present invention, there is provided a method of operating the combined valve assembly as described above, comprising causing the current to pass through the coil.

It may be that the method comprises causing the first current to pass through the coil. It may be that the method comprises causing the second current to pass through the coil. It may be that causing the current to pass through the coil comprises causing a valve control signal to be transmitted to the coil. The valve control signal may be indicative of a current to be applied to the coil.

In accordance with an aspect of the present invention, there is provided a controller for a combined valve assembly as described above. The controller is configured to perform the method as described above.

The controller may typically be configured to control the combined valve assembly. The control may typically be configured to control the current applied to the coil. It may be that the controller comprises one or more processors. It may be that the controller comprises computer readable memory. It may be that the computer readable memory is configured to store instructions which, when executed by the one or more processors, causes a current to be applied to the coil. It may be that the controller exchanges data and/or control signals with other components of the combined valve assembly. It may be that the controller is configured to change the current applied to the coil to increase or reduce the current applied to the coil. The computer readable memory may be non-transitory computer readable memory. The memory may be solid-state memory. The controller may be provided in a single device. In other example, the controller maybe distributed, having a plurality of processors. A first processor may be separated from a second processor in a distributed manner.

In accordance with an aspect of the present invention, there is provided a hydraulic fluid machine comprising: one or more combined valve assemblies as described above, and the controller described above.

The hydraulic fluid machine may be provided as part of a vehicle, such as a loader, for example a wheel loader.

The hydraulic machine may typically comprise a rotatable shaft in driven engagement with a prime mover. The hydraulic machine may typically comprise at least one working chamber having a volume which varies cyclically with rotation of the rotatable shaft. The at least one working chamber may comprise the first valve to regulate flow of hydraulic fluid between the working chamber and a first manifold and the second valve to regulate flow of hydraulic fluid between the working chamber and a second manifold.

The hydraulic machine typically defines a plurality of working chambers, each in a hydraulic circuit. Each working chamber may be defined partially by an interior surface of a cylinder, and a movable working surface, mechanically coupled to the rotatable shaft. Typically, the movable working surface is a surface of the piston, in a piston cylinder pair. A volume of each working chamber may vary cyclically with each rotation of the rotatable shaft. In this way, it will be understood that energy is exchanged between the hydraulic circuit and the prime mover by movement of one or more of the movable working surfaces and the rotatable shaft.

The at least one working chamber may be a chamber of the hydraulic machine which has a cyclically-varying volume during operation of the hydraulic machine, as is known in the field of hydraulic machines. It will be understood that typically a hydraulic machine also comprises a rotatable shaft mechanically coupled to a working surface of the working chamber. Cyclic variation of the volume of the working chamber is achieved by movement of the working surface within a cylinder, each working surface partially defining the working chamber. Rotation of the rotatable shaft causes or is caused by relative movement of the working surfaces. The hydraulic machine may be electronically controlled. The hydraulic machine may be synthetically commutated. The hydraulic machine may be a variable displacement hydraulic machine. The hydraulic machine may be a digital displacement hydraulic machine.

Typically, the hydraulic fluid machine may be a pump and/or a motor and/or a pump-motor. It may be that the first valve is a low-pressure valve used to control flow into or out of working chambers of the hydraulic machine to/from a low-pressure manifold. It may be that the second valve is a high-pressure valve used to control flow into or out of the working chambers of the hydraulic machine to/from a high-pressure manifold.

The invention may relate particularly to electronically commutated hydraulic fluid machines which intersperse, in a first mode of operation, active cycles of working chamber volume, where there is a net displacement of hydraulic working fluid, with inactive cycles of working chamber volume, where there is no net displacement of hydraulic working fluid between the working chamber and the hydraulic circuit. Typically, the majority or all of the active cycles are full stroke cycles, in which the working chambers displace a predetermined maximum displacement with the high pressure manifold of working fluid by suitable control of the timing of valve control signals. It is also known to regulate the one or more low- and optionally high-pressure valves of the at least one working chamber to regulate the fraction of maximum displacement made during an active cycle by operating so-called part stroke cycles. However, such machines typically intersperse active and inactive cycles, with the active cycles being full stroke cycles, with the fraction of cycles which are active cycles (the active cycle fraction) varied to achieve a demanded fractional displacement, instead of relying on part stroke cycles to provide some fraction of maximum hydraulic machine displacement.

The controller is typically configured (e.g. programmed) to control the first and second valves of the at least one working chambers to cause each working chamber to carry out either an active or an inactive cycle of working chamber volume during each cycle of working chamber volume. The controller may control at least one of the first and second valves using a valve control signal. The valve control signal may control actuation of at least one of the first and second valves. It may be that the controller (and optionally a further controller) is configured to control the first and second valves in phased relationship with cycles of working chamber volume.

An operation of the first and/or second valve may correspond to movement of the sealing member from one position to another. The first and/or second valve are actuated to trigger displacement to/from the cylinders, thereby leading to torque being applied to the rotatable shaft.

It may be that the controller and/or the combined valve assembly described hereinbefore may be configured to carry out any one or more of the method steps described hereinbefore, in any combination, unless inherently incompatible therewith. Similarly, it may be that the methods described hereinbefore may include performing any one or more of the steps the controller and/or the combined valve assembly are configured or arranged to perform, in any combination, unless inherently incompatible therewith.

### Description of the Drawings

An example embodiment of the present invention will now be illustrated with reference to the following Figures in which:
Figures 1, to 4 are schematics of a combined valve assembly according to an aspect of the present invention;
Figures 5 and 6 are graphs showing how position of a first armature and flux varies with time according to an aspect of the present invention;
Figure 7 is a flowchart showing a method according to an aspect of the present invention;
Figure 8 is a schematic illustration of a controller in accordance with an aspect of the present invention; and
Figure 9 is a schematic illustration of a hydraulic fluid machine according to an aspect of the present invention.

### Detailed Description of an Example Embodiment

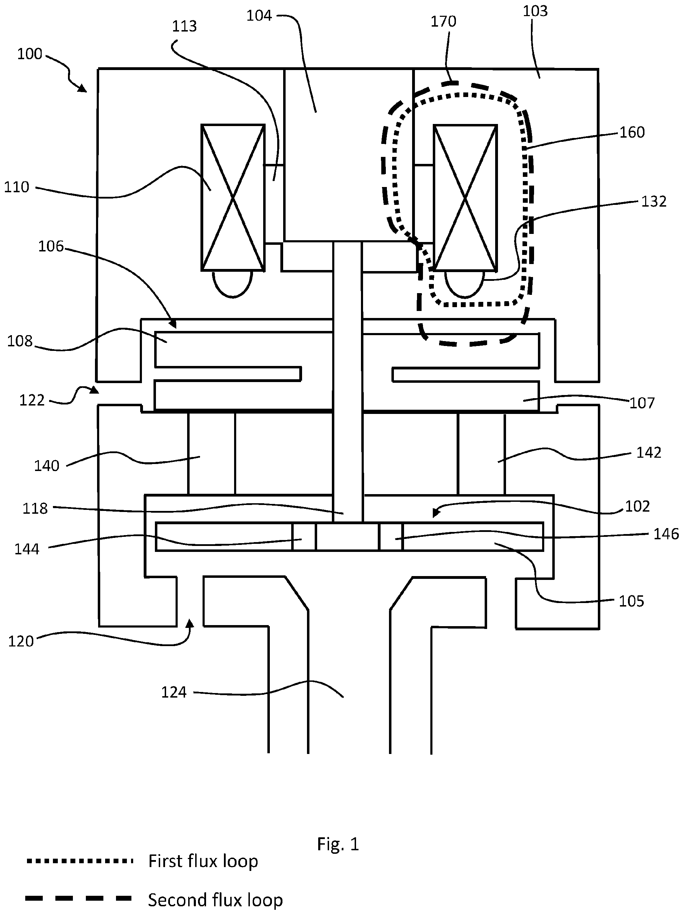

Figures 1, 2, 3 and 4 illustrate a combined valve assembly 100 according to an aspect of the present invention. The combined valve assembly 100 includes a first (low pressure) valve 102 which includes a first sealing member 105 connected to a first armature 104 by a connecting rod 118. The combined valve assembly 100 includes a second (high pressure) valve 106 which includes a second sealing member 107 connected to a second armature 108. The first sealing member 105 allows or prevents flow of fluid through a first valve port/ports 120 into a (low pressure) manifold (not shown). The second sealing member 107 allows or prevents flow of fluid through a second valve port/ports 122 into a (high pressure) manifold (not shown). The combined valve assembly 100 includes a valve assembly body 103 which surrounds a coil 110. The valve assembly 100 is connected to a cylinder 124. The passages 140, 142, 144, 146 allow for the flow of hydraulic fluid from/to the second valve port/ports into/out of the working chamber 124. The combined valve assembly 100 also includes a non-magnetic component 113.

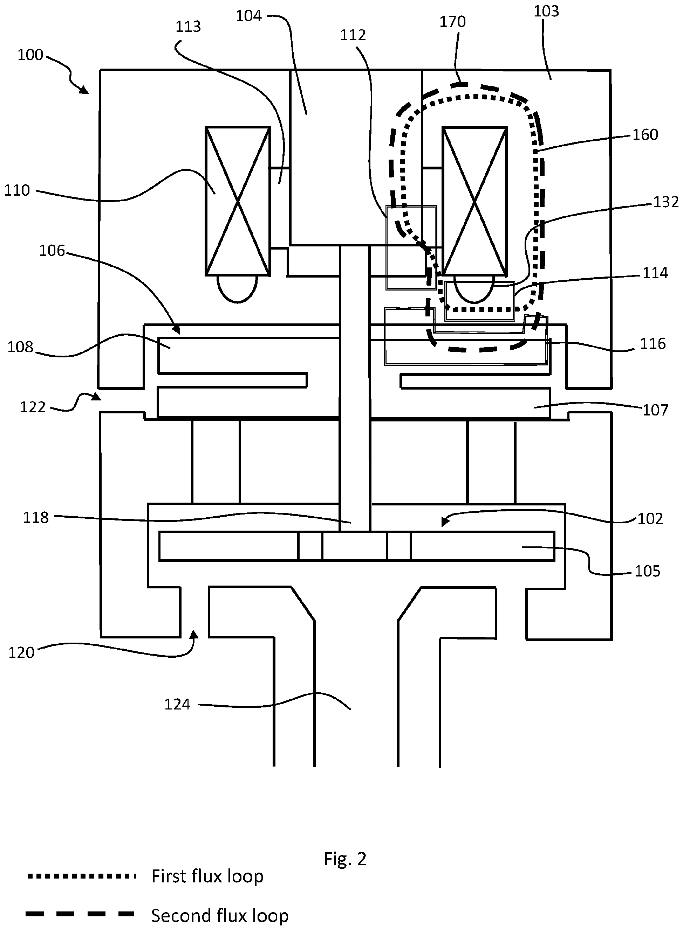

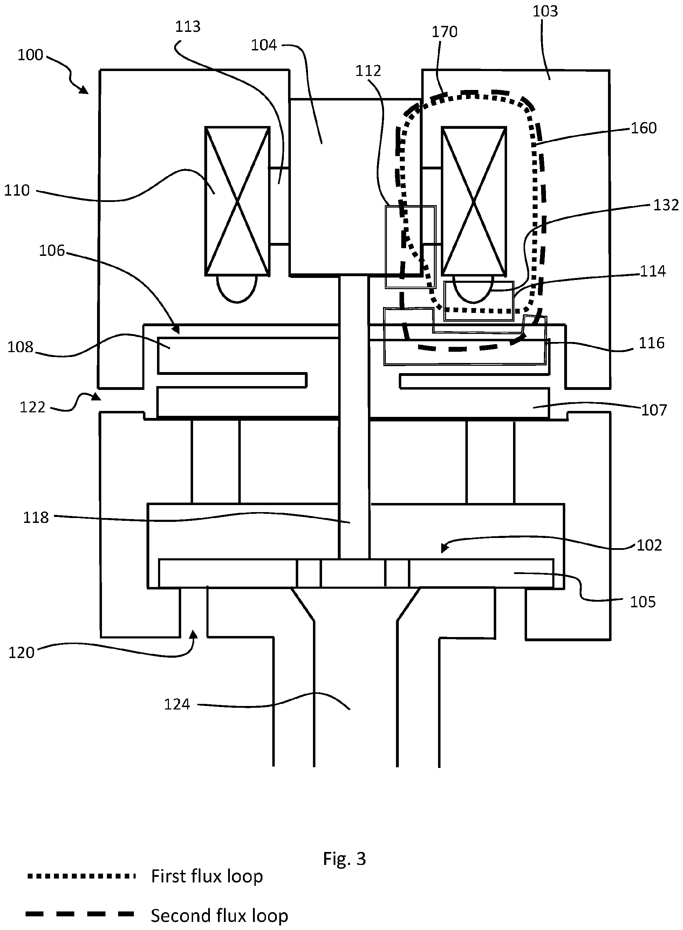

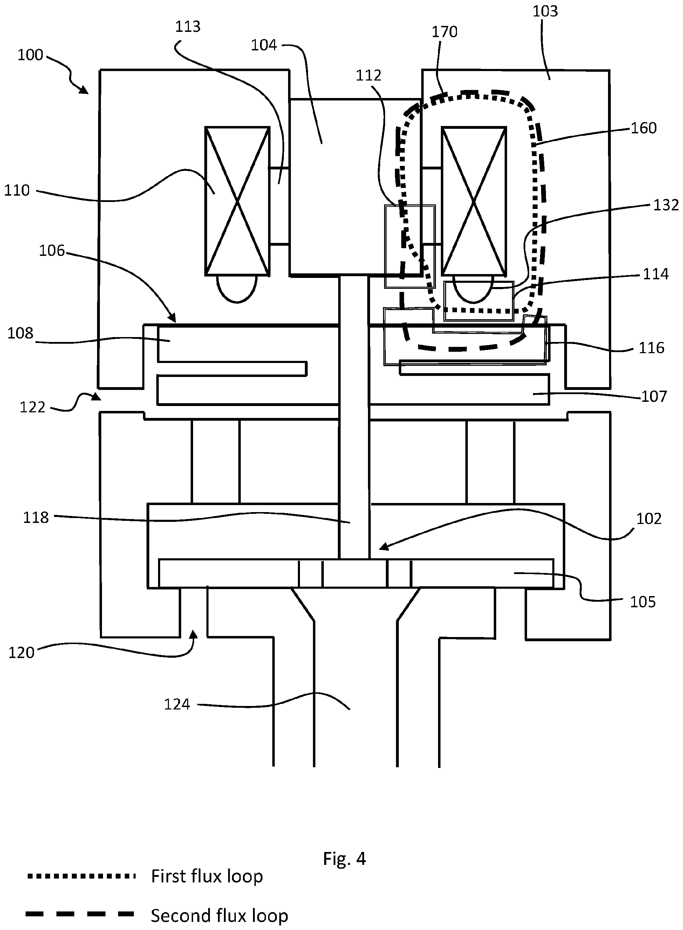

In Figures 1 and 2, the first armature 104 is shown in a first position which corresponds to an open position of the first valve 102 and the second armature 108 is shown in a first position which corresponds to a closed position of the second valve 106. In Figure 3, the first armature 104 is shown in a second position which corresponds to a closed position of the first valve 102 and the second armature 108 is shown in the first position which corresponds to the closed position of the second valve 106. In Figure 4, the first armature 104 is shown in the second position which corresponds to the closed position of the first valve 102 and the second armature 108 is shown in a second position which corresponds to an open position of the second valve 106.

In Figures 1 to 4, the dotted line shows a first flux loop (160) and the dashed line shows a second flux loop (170). In Figures 2 to 4, a first region 112, a second region 114 and a third region 116 are shown in boxes. These are general indications of where such regions are located however the exact positioning of each region will depend on the geometry of the valve assembly. The lines representing the first and second flux loops (160, 170) are fictive lines showing where magnetic flux can be thought to travel. The singular lines of flux are merely representative and indicate that in reality there will be a set of first flux loops (160) and a set of second flux loops (170) (each loop having a distinct line). It will be understood that literal lines do not exist in the apparatus, or during use, though the lines are commonly understood in the field of electromagnet and solenoid analysis. The first region 112 comprises a portion of the valve assembly body 103, and at least a portion of each of the first armature 104 and any air gap between the first armature 104 and the valve assembly body 103. The first region 112 does not include the second armature 108. The second region 114 includes a ferromagnetic region of the valve assembly body 103 and does not include either the first or second armatures 104, 108. The second region 114 is mutually exclusive to the first region 112. The third region 116 includes at least a portion of each of any air gap between the second armature 108 and the valve assembly body 103, and the second armature 108 (and may also include a portion of the valve assembly body 103). The third region 116 is mutually exclusive to the first region 112 and the second region 114.

The first flux loop (160) is established in the first and second regions 112, 114 and other portions of the valve assembly body 103. The second flux loop (170) is established in the first and third regions 112, 116 and other portions of the valve assembly body 103.

The second region 114 includes a portion of the valve assembly body 103 which portion defines at least part of a cut out 132. The cut out 132 defines a reduced cross-sectional area (perpendicular to the flux so in the direction of A-A') of the ferromagnetic region of the valve assembly body 103 in the second region 114. The cut out 132 causes the second region 114 to have a maximum amount of flux which can pass through this region that is lower than the maximum amount of flux which can pass through other regions of the valve assembly body 103. As a result, the second region 114 becomes saturated at lower amounts of flux than other regions of the valve assembly body 103.

Since the second region 114 has a smaller cross section than the other parts of the ferromagnetic region of the valve assembly body 103 in which the first flux loop (160) is established, the flux density in the second region 114 is the greatest in the second region 114 compared to the flux density in any other region in which the first flux loop (160) is established.

Referring now to the second valve 106 and more particularly the second armature 108, as mentioned earlier, the second armature 108 is in the first position in Figures 1 to 3 and the second position in Figure 4. The third region 116 includes an air gap, which closes when the second armature 108 moves from the first position to the second position.

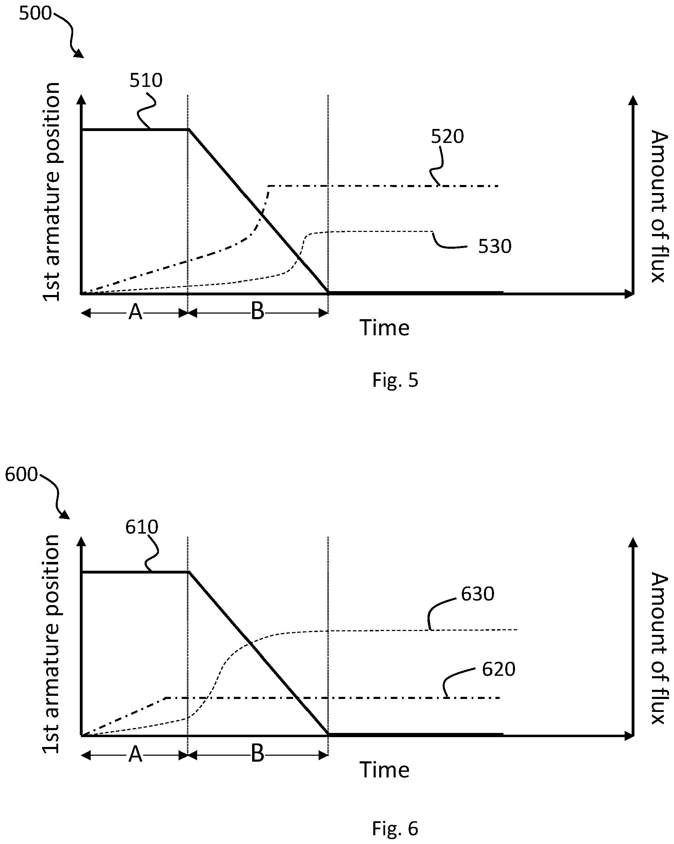

Figures 5 and 6 are two graphs (respectively 500, 600) showing how position of the first armature 104 and flux varies with time according to an aspect of the present invention. Graph 500 shows an embodiment where the second region 114 (i.e. the saturating part) only starts to saturate as the first armature 104 starts to move toward the second position. In contrast, for Graph 600, this shows an embodiment where the second region 114 (i.e. the saturating part) starts to saturate before the first armature 104 starts to move toward the second position. In particular, the solid black lines (respectively 510, 610) show how the position of the first armature 104 varies over time. During period A, the first valve 102 is in the open position, during period B, the first valve 102 is actuated and transitions from the open position to the closed position. After period B, the first valve 102 is in the closed position.

Dot-dashed lines (respectively 520, 620) represent the amount of flux through the second region 114 as time varies. Dashed lines (respectively 530, 630) represent the amount of flux through the third region 116 as time varies. As shown by both of these lines, in period A the total flux in the magnetic circuit of combined valve assembly 103 increases. This increase in flux is due to current through the coil 110 increasing. At the end of the period A, the force generated by the flux in the first region 112 is sufficient to, with the hydraulic fluid forces, move the first armature 104 into the second position (as in Figure 3), thereby actuating the first valve 102.

As shown by both dashed lines on respective graphs 500, 600, in period B the total flux in the magnetic circuit also increases during this period. The increase in total flux (amount of flux in the second and third regions, summed together) in the magnetic circuit in period B increases as a result of the first armature 104 moving into the second position. This is because the magnetic reluctance of the first region 112 decreases when the first armature 104 is moved into the second position. Since the magnetic reluctance of the magnetic circuit of the combined valve assembly 103 is decreased, the total flux within the magnetic circuit increases, thereby increasing the flux in the second and third regions 114, 116. When the second region 114 becomes saturated, additional flux in the magnetic circuit (said circuit includes the first region 112) is carried via an alternate route, i.e. in the third region 116 which at that moment is unsaturated. This causes the amount of flux in the third region 116 to increase. As the amount of flux in the third region 116 increases, the force generated across the third region 116 causes the second valve 106 to be actuated. The second valve 106 is then held in the open position (i.e. the second armature 108 is held in the second position) by magnetic forces acting on the second armature 108.

In graph 500, the amount of flux in the second region 114 (as shown by line 520) is greater than the amount of flux in the third region 116 (as shown by line 530) at all times. This occurs in configurations of the combined valve assembly 103 in which the force required to move the first armature 104 is greater than the force required to move the second armature 108.

In graph 600, the amount of flux in the second region 114 (as shown by line 620) is greater than the amount of flux in the third region 116 (as shown by line 630) during period A. As the first valve 102 is actuated, the amount of flux in the third region 116 increases such that in period B the amount of flux in the third region 116 is greater than the amount of flux in the second region 114. This occurs in configurations of the combined valve assembly 103 in which the force required to move the second armature 108 is greater than the force required to move the first armature 104.

In both of graphs 500, 600 the amount of flux in the third region (respectively 530, 630) at any time beyond the end point of period B, is greater than the amount of flux in the second region (respectively 520, 620) in Period A.

In respect of the embodiments in the two graphs Figures 5 & 6, that of graph 500 favours force generation on the first armature 104 at the expense of force on the second armature 108. The embodiment of graph 600 is the opposite. The balance between these two forces is continuously adjustable, by changing the cross-sectional area of the second region 114. Graph 500 refers to an embodiment with a larger cross-sectional area, and graph 600 to an embodiment with a smaller cross-sectional area.

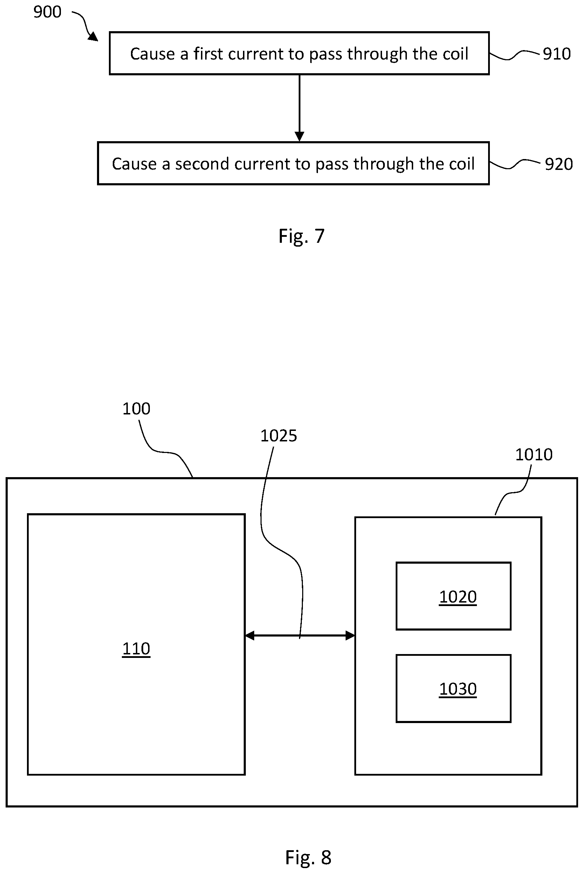

Figure 7 shows a flowchart of a method 900 according to an aspect of the present invention. The method 900 comprises causing 910 (e.g. by transmitting a control signal) a first current to pass through the coil 110. When the first current is passed through the coil 110, the flux through the first, second and third regions 112, 114, 116 increases until a sufficient force is applied to the first armature 104. The force applied to the first armature 104 actuates the first valve 102 from the open to the closed position. The result of actuation of the first armature 104 causes the total flux in the first, second and third regions 112, 114, 116 to increase further until the second region 114 is saturated. When the second region 114 is saturated, the flux in the third region 116 increases at a greater rate until a sufficient force is applied to the second armature 108. The force applied to the second armature 108 actuates the second valve 106 from the closed to the open position. After the second valve 106 has been actuated, the method comprises causing 920 a second current to pass through the coil 110. The second current is a holding current which is lower than the first current and holds the second valve 106 in the open position.

Figure 8 is a schematic illustration of a controller 1010 according to an aspect of the invention. The controller 1020 is provided in a combined valve assembly 100. The controller 1020 is configured to exchange signals 1025 with other components of the combined valve assembly 100, such as the coil 110. The controller 1010 in this example is realised by one or more processors 1020 and a computer-readable memory 1030. The memory 1030 stores instructions which, when executed by the one or more processors 1020, cause the combined valve assembly 100 to operate as described herein.

Although the controller 1010 is shown as being part of the combined valve assembly 100, it will be understood that one or more components of the controller 1010, or even the whole controller 1010 can be provided separate from the valve assembly 100, for example remotely from the valve assembly 100, to exchange signals with the valve assembly for example by wireless communication.

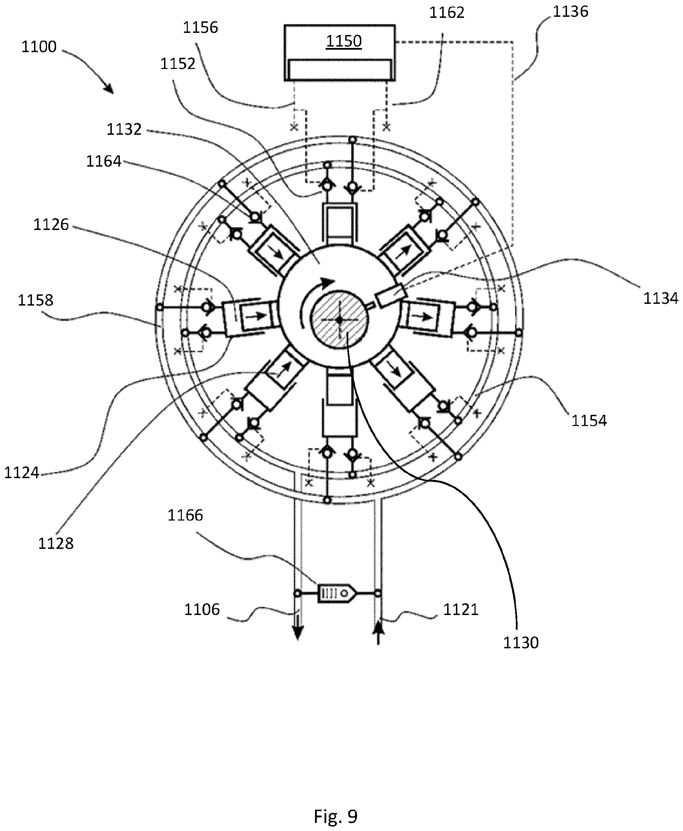

Figure 9 is a schematic diagram of part of the hydraulic fluid machine including the combined valve assembly 100 shown in Figures 1 to 4, and shows a single group of working chambers currently connected to one or more hydraulic components (e.g. an actuator) through a high pressure manifold 1154. Figure 9 provides detail on the first group 1100, said group comprises a plurality of working chambers (8 are shown) having cylinders 1124 which have working volumes 1126 defined by the interior surfaces of the cylinders and pistons 1128 (providing working surfaces 1128) which are driven from a rotatable shaft 1130 by an eccentric cam 1132 and which reciprocate within the cylinders to cyclically vary the working volume of the cylinders. The rotatable shaft is firmly connected to and rotates with a drive shaft. A shaft position and speed sensor 1134 sends electrical signals through a signal line 1136 to a controller 1150, which thus enables the controller to determine the instantaneous angular position and speed of rotation of the shaft, and to determine the instantaneous phase of the cycles of each cylinder.

The working chambers are each associated with Low Pressure Valves (LPVs) in the form of electronically actuated face-sealing poppet valves 1152, which have an associated working chamber and are operable to selectively seal off a channel extending from the working chamber to a low-pressure hydraulic fluid manifold 1154, which may connect one or several working chambers, or indeed all as is shown here, to the low-pressure hydraulic fluid manifold hydraulic circuit. The LPVs are normally open solenoid actuated valves which open passively when the pressure within the working chamber is less than or equal to the pressure within the low-pressure hydraulic fluid manifold, i.e. during an intake stroke, to bring the working chamber into fluid communication with the low-pressure hydraulic fluid manifold but are selectively closable under the active control of the controller via LPV control lines 1156 to bring the working chamber out of fluid communication with the low-pressure hydraulic fluid manifold. The valves may alternatively be normally closed valves. As well as force arising from the pressure difference across the valve, flow forces from the passage of fluid across the valve, also influence the net force on the moving valve member.

The working chambers are each further associated with a respective High-Pressure Valve (HPV) 1164 each in the form of a pressure actuated delivery valve. The HPVs open outwards from their respective working chambers and are each operable to seal off a respective channel extending from the working chamber through a valve block to a high-pressure hydraulic fluid manifold 1158, which may connect one or several working chambers, or indeed all as is shown in Figure 9. The HPVs function as normally-closed pressure-opening check valves which open passively when the pressure within the working chamber exceeds the pressure within the high-pressure hydraulic fluid manifold. The HPVs also function as normally-closed solenoid actuated check valves which the controller may selectively hold open via HPV control lines 1162 once that HPV is opened by pressure within the associated working chamber. Typically, the HPV is not openable by the controller against pressure in the high pressure hydraulic fluid manifold. The HPV may additionally be openable under the control of the controller when there is pressure in the high-pressure hydraulic fluid manifold but not in the working chamber, or may be partially openable.

In a pumping mode, the controller selects the net rate of displacement of hydraulic fluid from the working chamber to the high-pressure hydraulic fluid manifold by the hydraulic motor by actively closing one or more of the LPVs typically near the point of maximum volume in the associated working chamber's cycle, closing the path to the low-pressure hydraulic fluid manifold and thereby directing hydraulic fluid out through the associated HPV on the subsequent contraction stroke (but does not actively hold open the HPV). The controller selects the number and sequence of LPV closures and HPV openings to produce a flow or create a shaft torque or power to satisfy a selected net rate of displacement.

In a motoring mode of operation, the controller selects the net rate of displacement of hydraulic fluid, displaced via the high-pressure hydraulic fluid manifold, actively closing one or more of the LPVs shortly before the point of minimum volume in the associated working chamber's cycle, closing the path to the low-pressure hydraulic fluid manifold which causes the hydraulic fluid in the working chamber to be compressed by the remainder of the contraction stroke. The associated HPV opens when the pressure across it equalises and a small amount of hydraulic fluid is directed out through the associated HPV, which is held open by the controller. The controller then actively holds open the associated HPV, typically until near the maximum volume in the associated working chamber's cycle, admitting hydraulic fluid from the high-pressure hydraulic fluid manifold to the working chamber and applying a torque to the rotatable shaft.

As well as determining whether or not to close or hold open the LPVs on a cycle by cycle basis, the controller is operable to vary the precise phasing of the closure of the HPVs with respect to the varying working chamber volume and thereby to select the net rate of displacement of hydraulic fluid from the high-pressure to the low-pressure hydraulic fluid manifold or vice versa.

Arrows on the low pressure fluid connection 1106, and the high-pressure fluid connection 1121 indicate hydraulic fluid flow in the motoring mode; in the pumping mode the flow is reversed. A pressure relief valve 1166 may protect the first group from damage.

In normal operation, the active and inactive cycles of working chamber volume are interspersed to meet the demand indicated by the hydraulic machine control signal. Throughout the description and claims of this specification, the words "comprise" and "contain" and variations of them mean "including but not limited to", and they are not intended to and do not exclude other components, integers, or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, or groups described in conjunction with a particular aspect, embodiment, or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A combined valve assembly (100) having a first valve (102) with a first armature (104) movable between a first position and a second position, and a second valve (106) with a second armature (108) movable between a first position and a second position, the valve assembly comprising a coil (110) at least partially surrounded by a valve assembly body (103), wherein, when the coil (110) has a current passing therethrough, the coil (110) is arranged to generate:
first flux loops (160) established in:
a first region (112) of the combined valve assembly (100), wherein, of the first and second armatures (104, 108), the first region (112) comprises only the first armature (104) and wherein the first region (112) comprises a first ferromagnetic region of the valve assembly body (103), and
a second region (114) of the combined valve assembly (100), wherein the second region (114) comprises a second ferromagnetic region of the valve assembly body (103), the second ferromagnetic region different to the first ferromagnetic region; and
second flux loops (170) established in:
the first region (112) of the combined valve assembly (100), and
a third region (116) of the combined valve assembly (100), the third region separate from the second region and comprising the second armature (108),
wherein the first flux loops (160) are established in, of the second region and the third region, only the second region, and wherein the second flux loops (170) are established in, of the second region and the third region, only the third region (116), and
wherein, the valve assembly is configured such that:
at a first time, when the first armature (104) is in the first position and the second armature (108) is in the first position, the flux established in the second region (114) is greater than the flux established in the third region (116), and
at a second time, subsequent to the first time and when the first armature (104) has moved from the first position into the second position, the second region (114) is magnetically saturated to thereby cause the flux in the third region (116) to increase, relative to the first time, by more than any increase, relative to the first time, of the flux in the second region (114) at the second time.

2. The combined valve assembly (100) of claim 1, wherein the flux in the second region (114) is greater at the second time than the flux in the second region (114) at the first time.

3. The combined valve assembly (100) of claim 1 or claim 2, wherein the flux in the first region (112) crosses between the valve assembly body (103) and the first armature (104), and wherein the valve assembly is configured such that, at the first time, a first force is generated by the flux in the first region (112) to actuate the first valve (102) by causing the first armature (104) to move into the second position.

4. The combined valve assembly (100) of claim 3, wherein movement of the first armature (104) into the second position thereby causes the magnetic reluctance of the first region (112) to decrease and the flux in the second region (114) to increase.

5. The combined valve assembly (100) of claim 3 or claim 4, wherein at least one of: an axial distance, if any, in the first region (112), between the valve assembly body (103) and the first armature (104) is less when the first armature (104) is in the second position than when the first armature (104) is in the first position; and an overlap area, in the first region (112), between the valve assembly body (103) and the first armature (104) is greater when the first armature (104) is in the second position than when the first armature (104) is in the first position.

6. The combined valve assembly (100) of any preceding claim, wherein at the first time, the second region (114) is unsaturated and at the second time, the second region (114) is saturated.

7. The combined valve assembly (100) of claim 6, wherein the second region (114) has the largest flux density of any other region in which the first flux loops (160) are established.

8. The combined valve assembly (100) of claim 6 or claim 7, wherein, when the first armature (104) is in the second position, the cross-sectional area of the second region (114) is less than the cross-sectional area of the other portions of the valve assembly body (103), said areas perpendicular to the direction of the flux respectively in the region and body.

9. The combined valve assembly (100) of any preceding claim, wherein the third region (116) comprises a portion of the valve assembly body (103) and the flux in the third region (116) crosses between the valve assembly body (103) and the second armature (108), and wherein the valve assembly is configured such that, at the second time, a second force is generated to either: actuate the second valve (106) by causing the second armature (108) to move to the second position, or maintain the second valve (106) in the second position, or both of the above.

10. The combined valve assembly (100) of any preceding claim, wherein the combined valve assembly (100) is configured such that actuation of the first armature (104) causes an increase of flux in the third region (116), which thereby causes actuation of the second armature (108).

11. The combined valve assembly (100) of any preceding claim, wherein the combined valve assembly (100) is configured such that actuation of the first valve (102) causes an increase of flux in the third region (116), which thereby causes actuation of the second valve (106).

12. The combined valve assembly (100) of any preceding claim, wherein the combined valve assembly (100) is configured such that actuation of the first valve causes the second valve (106) to be actuated into the second position by fluid forces, and the second valve (106) is maintained in the second position by magnetic forces which arise from the flux in the third region (116), the magnetic forces acting on the second armature (108).

13. A method of operating the combined valve assembly (100) of any preceding claim, comprising causing the current to pass through the coil (110).

14. A controller for a combined valve assembly as claimed in any of claims 1 to 12, the controller configured to perform the method as claimed in claim 13.

15. A hydraulic fluid machine comprising:
one or more combined valve assemblies as claimed in any of claims 1 to 12; and
the controller of claim 14.
